## Europäisches Patentamt
## European Patent Office
## Office européen des brevets

(19)

(11) Veröffentlichungsnummer: **0 153 275**
**B1**

(12) # EUROPÄISCHE PATENTSCHRIFT

(45) Veröffentlichungstag der Patentschrift:
22.07.87

(51) Int. Cl.⁴: **F 16 B 13/14,** F 16 B 37/14

(21) Anmeldenummer: **85810007.6**

(22) Anmeldetag: **11.01.85**

(54) **Ankerstange.**

(30) Priorität: **13.02.84 DE 3405072**

(43) Veröffentlichungstag der Anmeldung:
**28.08.85 Patentblatt 85/35**

(45) Bekanntmachung des Hinweises auf die Patenterteilung:
**22.07.87 Patentblatt 87/30**

(84) Benannte Vertragsstaaten:
**AT CH DE FR LI**

(56) Entgegenhaltungen:
**DE-A-2 409 658**
**DE-A-2 545 417**
**DE-A-2 857 433**
**DE-A-3 111 042**
**DE-A-3 244 167**

(73) Patentinhaber: **HILTI Aktiengesellschaft, FL- 9494 Schaan (LI)**

(72) Erfinder: **Herb, Armin, Lärchenstrasse 9, D-8123 Peissenberg (DE)**

(74) Vertreter: **Wildi, Roland, Hilti Aktiengesellschaft Patentabteilung, FL- 9490 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft eine Ankerstange zum drehenden oder drehschlagenden Einbringen in aushärtbare Masse enthaltende Aufnahmebohrungen, wobei die Einleitung des Drehmomentes in die Ankerstange über eine mittels eines Gewindes an der Ankerstange angeordnete Gewindemutter erfolgt, wofür in deren Gewindebohrung ein Anschlagring vorgesehen ist, der das vollständige Aufschrauben der Gewindemutter so lange verhindert, bis aufgrund des Aushärtens der Masse das Drehmoment einen vorbestimmten Wert überschreitet (DE-A-24 09 658).

Zum Einbringen von Ankerstangen in Aufnahmebohrungen der genannten Art ist es bekannt, das Drehmoment mittels eines Werkzeuges von einem Antriebsgerät, beispielsweise einer Handbohrmaschine, an eine Gewindemutter zu übertragen, die teilweise auf der Ankerstange aufgeschraubt ist. Hierzu steht das aus der Aufnahmebohrung ragende Stirnende der Ankerstange unter Verkonterung an einem in der Gewindemutter sitzenden Anschlagring auf.

Da beim Einbringen der Ankerstange die in der Aufnahmebohrung vorhandene Masse auszuhärten beginnt, wächst das an die Ankerstange zu übertragende Drehmoment an. Ueberschreitet aufgrund des ansteigenden Drehmomentes die ebenfalls ansteigende Verkonterungskraft die Festigkeit des Anschlagringes, so wird dieser zerstört oder aus der Gewindemutter herausgedrückt.

In wirtschaftlicher und handhabungsmässiger Hinsicht nachteilig ist dabei, dass zum Angriff an den Schlüsselflächen der Gewindemutter relativ aufwendig ausgebildete Werkzeuge erforderlich sind, wobei für unterschiedlich dimensionierte Ankerstangen unterschiedliche Gewindemuttern vorgesehen sind, was wiederum unterschiedlich grosse Werkzeuge erfordert.

In verschiedenen Einsatzfällen sind beim Einbringen der Ankerstange nebst Drehbewegung auch Schläge zu vermitteln. Das Einleiten solcher Schläge ist bei der bekannten Anordnung mit erheblichen Nachteilen verbunden. So hat die Gewindeverbindung zwischen Mutter und Ankerstange die Schläge zu übertragen, was einerseits zu Beschädigungen der Gewindeverbindung führen kann und andererseits Energieverluste zur Folge hat. Die Schlagimpulse wirken sich aber auch ungünstig auf den Anschlagring aus, was zu einer starken Streuung des übertragbaren Drehmomentes führt.

Der Erfindung liegt die Aufgabe zugrunde, eine Ankerstange zum Setzen in aushärtbare Massen enthaltende Aufnahmebohrungen zu schaffen, deren Gewindemutter eine wirtschaftliche Einrichtung zur exakten Vorbestimmung des Drehmomentes aufweist und die Einrichtung von gegebenenfalls auf die Ankerstange einwirkenden Schlägen nicht beeinflusst wird.

Erfindungsgemäss wird die Aufgabe dadurch gelöst, dass der Anschlagring Angriffsmittel für das Drehmoment erzeugende Werkzeuge aufweist.

Der vorzugsweise aus Kunststoff bestehende, in der Gewindebohrung beispielsweise durch Eingiessen, Einpressen oder Einkleben festgelegte Anschlagring ermöglicht durch die Angriffsmittel die Einleitung des Drehmomentes in die Gewindemutter. Dabei ist es möglich, für unterschiedlich dimensionierte Ankerstangen Anschlagringe mit einheitlichen Angriffsmitteln einzusetzen. Folglich bedarf es nur eines einfachen einheitlichen Werkzeuges. Ferner ermöglicht der Anschlagring einen zentrischen Durchgriff des Werkzeuges auf die sich am Anschlagring zwecks Verkonterung anlegende Stirnseite der Ankerstange, so dass mit der Einleitung des Drehmomentes auch allfällige Schläge vom Werkzeug direkt an die Ankerstange abgegeben werden können. Die Gewindeverbindung zwischen Ankerstange und Gewindemutter liegt demnach nicht in der Kraftübertragungskette für die Schlagenergie.

Mit Vorteil weist die Durchgangsbohrung des Anschlagsringes einen unrunden Querschnitt auf, deren Wandungsteile die Angriffsmittel in Form von Mitnahmeflächen bilden. Diese Art von Angriffsmitteln erlaubt eine einfache Art der Ausbildung von Anschlagring und insbesondere des mit diesem zusammenwirkenden Werkzeuges. Letzteres kann im wesentlichen lediglich als die Durchgangsbohrung durchsetzender Stift mit korrespondierend unrundem Querschnitt gestaltet sein.

Vorzugsweise ist der Querschnitt der Durchgangsbohrung als Polygon ausgebildet. Dieserart stehen für die Drehmitnahme über den Umfang der Durchgangsbohrung verteilt mehrere gleichzeitig wirkende Mitnahmestellen zur Verfügung.

In Weiterbildung der Erfindung sind die Mitnahmeflächen plan ausgebildet. Es lassen sich so handelsübliche Mehrkant-Werkzeuge verwenden. Als besonders zweckmässig erweist sich ein Vierkant-Querschnitt für die Durchgangsbohrung und das Werkzeug.

Nach einem weiteren Vorschlag der Erfindung sind die Mitnahmeflächen konvex ausgebildet. Der besondere Vorteil dieser Ausführungsform liegt im ausgezeichneten formschlüssigen Eingriff des korrespondierend ausgebildeten Werkzeugs in den Uebergangszonen der konvexen Mitnahmeflächen. Ferner lässt sich bei dieser Ausgestaltung im Verhältnis zum Durchmesser des Werkzeuges eine grosse für die Uebertragung der Schläge wirksame Stirnfläche des Werkzeugs erzielen.

Der Querschnitt der Durchgangsbohrung des Anschlagringes kann aber auch andere Konfigurationen aufweisen. So sind beispielsweise ebenso Stern- oder Kreuzprofile geeignet.

Die Erfindung wird nachstehend anhand einer Zeichnung, die Ausführungsbeispiele wiedergibt, näher erläutert. Es zeigen:

Fig. 1 den hinteren Abschnitt einer Ankerstange mit längsgeschnittener Gewindemutter und in diese einragendem Werkzeug;

Fig. 2 einen Schnitt II-II durch die Anordnung nach Fig. 1;

Fig. 3 einen hinteren Abschnitt einer Ankerstange mit längsgeschnittener Gewindemutter anderer Ausführung und in diese einragendem Werkzeug;

Fig. 4 einen Schnitt IV-IV durch die Anordnung nach Fig. 3.

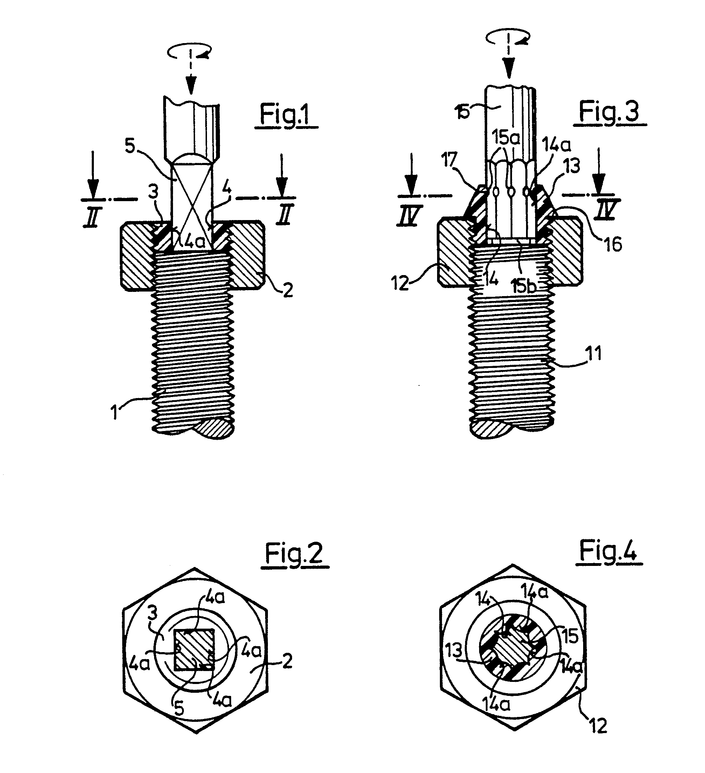

Die Fig. 1 zeigt eine Ankerstange 1 mit auf deren Endbereich sitzender Gewindemutter 2. In deren Gewindebohrung ist ein sich etwa über die halbe Höhe der Mutter 2 erstreckender Anschlagring 3 aus Kunststoff eingegossen. Die Durchgangsbohrung 4 des Anschlagringes 3 weist einen polygonalen Querschnitt auf, wobei die Wandungsteile derselben plane Mitnahmeflächen 4a zum formschlüssigen Eingriff eines Werkzeuges 5 mit korrespondierendem Querschnitt bilden.

In Fig. 2 ist der drehschlüssige Eingriff des Werkzeuges 5 in den Anschlagring 3 bzw in die Gewindemutter 2 verdeutlicht.

Zum Einbringen der Ankerstange 1 wird, wie durch Pfeile in Fig. 1 angedeutet, vom Werkzeug 5 einerseits Drehbewegung über den Anschlagring 3 und die Gewindemutter 2 in die Ankerstange 1 und andererseits Schlagenergie vom Werkzeug 5 direkt auf die Ankerstange 1 eingeleitet.

In Fig. 3 sitzt auf einer Ankerstange 11 wiederum eine Gewindemutter 12 mit einem Anschlagring 13. Die Durchgangsbohrung 14 des Anschlagringes 13 weist einen im wesentlichen polygonalen Querschnitt auf, wobei die Wandungsteile der Durchgangsbohrung von konvexen Mitnahmeflächen 14a gebildet sind. In die Durchgangsbohrung 14 ragt wiederum ein Werkzeug 15 mit zur Durchgangsbohrung korrespondierendem Querschnitt ein.

Der wiederum aus Kunststoff bestehende Anschlagring 13 ist gegen eine Auflaufschulter 16 in die Gewindemutter 12 drehfest eingeschraubt. An der Wandung der Durchgangsbohrung 14 läuft ein der axialen Arretierung des Werkzeugs 15 dienender Wulst 17 um. Dieser rastet in mantelseitige Ausnehmungen 15a am Werkzeug 15 ein. Das Werkzeug 15 weist an dessen freiem Ende zudem einen der Schlagübertragung dienenden Fortsatz 15b auf.

Die Fig. 4 verdeutlicht im besonderen den formschlüssigen Eingriff des Werkzeugs 15 in die Durchgangsbohrung 14 des Anschlagringes 13.

Die Funktionsweise dieser Anordnung entspricht der zu den Fig. 1 und 2 beschriebenen. Bei beiden Ausführungsformen versagt die Festigkeit des Anschlagringes 3 bzw 13 im Bereich der Gewindeverbindung bei fortschreitendem Einbringen der Ankerstange aufgrund des Aushärtens der in den Aufnahmebohrungen für die Ankerstange 1 bzw 11 vorhandenen Masse und des dadurch zunehmenden Drehmomentes. Der Anschlagring 3 bzw 13 ist alsdann gegenüber der Gewindemutter 2 bzw 12 frei drehbar und kann entnommen werden. Die Gewindemutter 2 bzw 12 wird nun in herkömmlicher Weise weiter auf die Ankerstange 1 bzw 11 aufgeschraubt.

**Patentansprüche**

1. Ankerstange (1, 11) zum drehenden oder drehschlagenden Einbringen in aushärtbare Masse enthaltende Aufnahmebohrungen, wobei die Einleitung des Drehmomentes in die Ankerstange über eine mittels eines Gewindes an der Ankerstange angeordnete Gewindemutter (2, 12) erfolgt, wofür in deren Gewindebohrung ein Anschlagring (3, 13) vorgesehen ist, der das vollständige Aufschrauben der Gewindemutter auf die Ankerstange so lange verhindert, bis aufgrund des Aushärtens der Masse das Drehmoment einen vorbestimmten Wert überschreitet, dadurch gekennzeichnet, dass der Anschlagring (3, 13) Angriffsmittel (4a, 14a) für das Drehmoment erzeugende Werkzeuge (5, 15) aufweist.

2. Ankerstange nach Anspruch 1, dadurch gekennzeichnet, dass die Durchgangsbohrung (4, 14) des Anschlagringes (3, 13) einen unrunden Querschnitt aufweist, deren Wandungsteile die Angriffsmittel in Form von Mitnahmeflächen (4a, 14a) bilden.

3. Ankerstange nach Anspruch 2, dadurch gekennzeichnet, dass der Querschnitt der Durchgangsbohrung (4, 14) als Polygon ausgebildet ist.

4. Ankerstange nach Anspruch 2 oder 3, dadurch gekennzeichnet, dass die Mitnahmeflächen (4a) plan ausgebildet sind.

5. Ankerstange nach Anspruch 2 oder 3, dadurch gekennzeichnet, dass die Mitnahmeflächen (14a) konvex ausgebildet sind.

**Claims**

1. An anchor rod (1, 11) for insertion under a rotary or rotary hammering action into a receiving bore containing a hardenable composition, where the torque is transmitted to the anchor rod by means of a threaded nut (2, 12) positioned on the thread of the anchor rod for which a stop ring (3, 13) is provided in the threaded bore of the nut which prevents the threaded nut from being completely screwed onto the anchor rod until the torque exceeds a certain value because of hardening of the composition, characterised in that the stop ring (3, 13) having attack means (4a, 14a) for tools (5, 15) producing the torque.

2. An anchor rod as claimed in claim 1 characterised in that the through-hole (4, 14) of the stop ring (3, 13) is non-circular and the wall sections of the through-hole drive the attack means in form of surfaces (4a, 14a).

3. An anchor rod as claimed in claim 2, characterised in that the cross-section of the through-hole (4, 14) having the shape of a polygon.

4. An anchor rod as claimed in claim 2 or 3, characterised in that the drive surfaces (4a) having a flat shape.

5. An anchor rod as claimed in claim 2 or 3, characterised in that the drive surfaces (14a) having a convex shape.

**Revendications**

1. Boulon d'ancrage (1, 11) pour la mise en place par rotation ou roto-percussion dans des perçages de réception contenant une masse durcissable l'application du couple de rotation dans le boulon d'ancrage se faisant par l'intermédiaire d'un écrou (2, 12) placé sur le boulon d'ancrage au moyen d'un filetage et dont le taraudage est muni, à cet effet, d'une bague de butée (3, 13) qui empêche le vissage complet de l'écrou sur le boulon d'ancrage jusqu'a ce que le couple de rotation dépasse une valeur prédéterminée du fait du durcissement de la masse, <u>caractérisé en ce</u> que la bague de butée (3, 13) comporte des moyens d'attaque (4a, 14a) pour des outils (5, 15) produisant le couple de rotation.

2. Boulon d'ancrage selon la revendication 1, caractérisé en ce que le trou de passage (4, 14) de la bague de butée (3, 13) présente une section non ronde dont les sections de paroi constituent les moyens d'attaque sous la forme de surfaces d'entraînement (4a, 14a).

3. Boulon d'ancrage selon la revendication 2, caractérisé en ce que la section du trou de passage (4, 14) présente une forme polygonale.

4. Boulon d'ancrage selon l'une des revendications 2 ou 3, caractérisé en ce que les surfaces d'entraînement (4a) sont planes.

5. Boulon d'ancrage selon l'une des revendications 2 ou 3, caractérisé en ce que les surfaces d'entraînement (14a) présentent une forme convexe.

Fig.1

Fig.3

Fig.2

Fig.4